# EUROPEAN PATENT SPECIFICATION

(11) **EP 0 827 576 B1**
(45) Date of publication and mention of the grant of the patent: **22.09.1999**
(21) Application number: 96909300.4
(22) Date of filing: 18.04.1996
(51) Int. Cl.: F16H 48/14

(54) **SELF-LOCKING DIFFERENTIAL WITH DISKS AND RINGS**
SELBTSPERRENDES AUSGLEICHSGETRIEBE MIT SCHEIBEN UND RINGEN
DIFFERENTIEL AUTOBLOQUANT A DISQUES ET BAGUES

(30) Priority: 07.06.1995 GR 95100220
(43) Date of publication of application: 11.03.1998
(73) Proprietor: Valasopoulos, Christos, 104 47 Athens (GR)
(72) Inventor: Valasopoulos, Christos, 104 47 Athens (GR)
(86) International application number: GR9600010
(87) International publication number: WO9641088

(56) References cited:
- WO-A-88/05139
- US-A- 3 548 683
- US-A- 4 291 591

## Description

The invention refers to the technical section of operation and application of differentials used in all types of wheeled vehicles.

In the conventional in use differential it is well known, that under a specific number of revolutions per minute of the engine, the sum of the speeds on both wheels is constant, consequently when both driving wheels are in traction on the pavement, with different coefficient of friction (µ), then one wheel will accelerate and the other will decelerate with the well known undesirable effects. The one wheel with the lower adhesion will spin, whereas the other wheel does not turn at all.

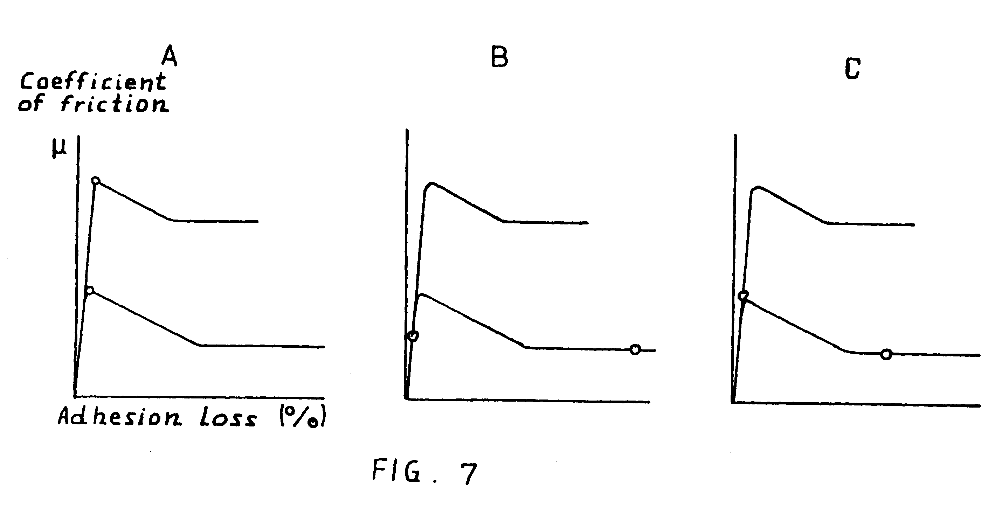

Under these conditions the power transmitted by friction forces on both wheels in minimal and the vehicle is brought to a standstill (Fig.7B).

To overcome this difficulty various differential types of limited slip were developed, which aim at improving the adhesion, with the variation of torque distribution, on the wheel with the greatest adhesion. While the conventional differential has a ratio of torque distribution (50:50) i.e., ratio of torque distribution (1:1) or sometimes (1,5:1) the limited slip differential, alters this torque distribution in favour of the axle with the greater adhesion to the ratio (80:20) or (4:1) and in some cases (6:1). That is to say, while the running free wheel is in a condition of high adhesion loss, the other axle picks up a small speed, passing to a condition with higher coefficient of friction.

Because these differentials use an engagement type between the two output axles, namely a clutch with disks fitted on the output axles, where the speed difference is balanced by the friction forces between the two disks, high friction forces occur resulting in the development of high temperatures and the quick wear of the system.

These systems also do not react promptly and allow the development of significant speed differences between the axles, resulting in the failure to avoid the spinning of the wheel with the lower adhesion.

An evolution of these differentials, are the differentials with cohesive engagement. In this case the disks are perforated and special fluid flows through the disks. The balancing of the axles speeds is achieved by the variation of the fluid pressure and subsequently of the friction forces between the disks. The operation characteristics and the engagement time, vary with the numbers of disks, and the film thickness of the fluid.

The advantage of these differentials, compared to the simple engagement differentials, is their reduced weight and inertia.

The Torsen type differentials are a peculiar planetary gear system. In the center of the system worm gears form the output towards the axles, while on their perimeter and the inside of the casing three pairs of shafts are fitted with gears meshing with the sun gear and between them.

This system has the ability of rapid torque transmission to the axle of the wheel with the greater resistance (greater adhesion). On the other hand the system has problems from the increased weight and inertia, because of the large numbers of gears, and from the high friction levels resulting in wear, high temperatures. The ratio of the delivered torque could reach the value of (6:1).

It differs from the reduced adhesion loss differentials, because it has an immediate reaction and does not allow significant speed differences, between the axles and consequently, spinning of the wheel, with the lower adhesion. Some of these disadvantages were reduced by the use of improved metal alloys and the simplification of the system. (Patent eqivex) making the system lighter and simpler, but it still is at a disadvantage concerning the torque distribution, wherein the ratio of the distributed torques reaches up to (3:1) Fig. (7C).

Finally with the new RICARDO differential currently under testing the transmission is not achieved through gears but through a cross fitted on the differential shaft and able to slide and rotate simultaneously.

The ball shaped ends of the cross are properly fitted with disks and are connected with the output axles. In this system the variation of torque distribution depends not only on the speed difference but also on the load, whose variation along with the variation of the friction coefficient through the help of an oil film, results in the transmission of the greater torque to the axle with the lower speed.

Tests have shown that the amount of the change of the torque distribution ratio depends on the selected speed ranging from (5:1) up to a minimum (2:1).

The present invention differs radically from the differential mechanisms, mentioned previously, as clearly results from the arrangement, configuration and operation of its mechanism as described in the following pages.

In concerns a new mechanism and method for its drive consisting of a combination of disk pairs and rings in contact, moving in a unique way due to their proper arrangement and shape, their motion delivered always towards an opposite rotation, through two properly set axles located in the center of the differential "axis".

The combination of the arrangement, shape and motion of two disk pairs and rings of this mechanism, through properly set axles, located in the center of the differential "axis", allows its operation either as a conventional differential in the case of normal adhesion of the drive wheels or as a direct engagement drive in the case of any adhesion loss i.e., reduction of friction coefficient of one wheel, in which case the mechanism locks with the respective engagement of the disk pair and rings, achieving the delivery of the remaining torque, of the wheel with adhesion loss, in favour of the wheel with the greater adhesion, and of the whole torque, in the extreme case of minimal or zero coefficient of friction (µ=0), in favour again of the wheel with the greater adhesion.

This engagement capability of the mechanism is possible to increase or decrease in the various embodiments, according to manufacturer requirements, through the increase or decrease of the inclination angle of the inclined plane surfaces machined on a pair of disks.

Due to the lack of any gears, balls and small machine elements with small contact surfaces or point contacts from the whole mechanism system, and the cooperation only of large engaged surfaces, the mechanism has the advantages, compared with the previously mentioned mechanisms, of friction elimination and high load carrying capacity.

It is obvious that all the elements of the differential take part continuously and as a whole in the operation of the mechanism. There isn't namely, in contrast with other systems, partial or incomplete power efficiency of the mechanism.

Because it is affordable to manufacture and use small size machine elements, for the mechanism, operating in a small space, the size and the weight of the differential could be substantially reduced, with the inertia forces kept to a minimum.

From the previously described, is obvious on the one hand the efficiency, simplicity and reliability of the system and on the other hand the elimination of wear and damage and consequently the increased and fault less system life. In addition to that the manufacture of the various differential components is easily executed with simple machining processes, and its manufacturing cost is definitely lower than any other differential techniques already in use. It can be used on any type of wheeled vehicle, on road, off road, of special type, easily adjustable to the required specifications of any vehicle type. In addition to that, it can be used as a central differential in the case of more than one driving axles.

### BRIEF DESCRIPTION OF DRAWINGS

The following description of the drawings wherein like numerals are used to designate like parts of the specific forms embodied in spirit and essential characteristics of this invention and to be considered in all respects as illustrative and not restrictive there of.

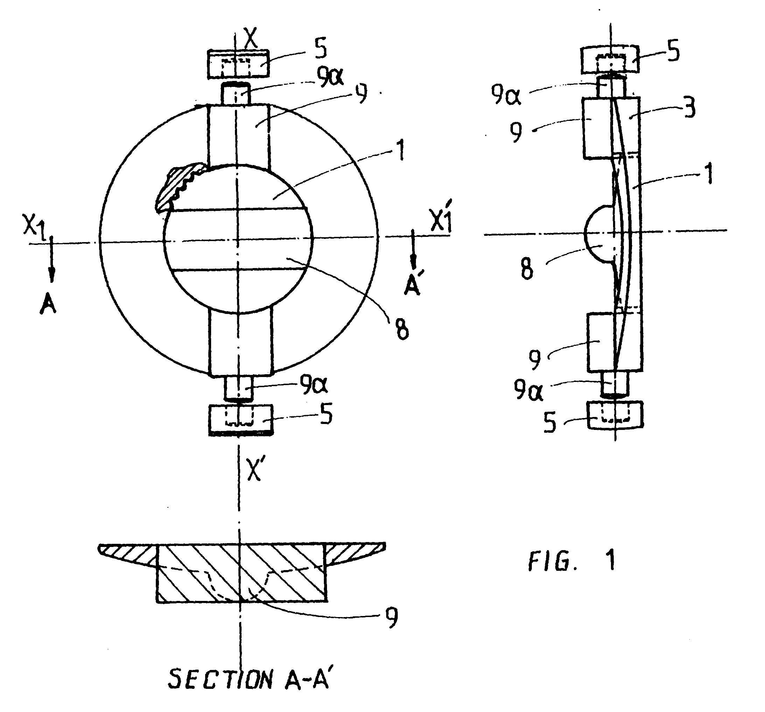

FIG.1 is a front view. side view and down view in cross section of a disk with the arranged shafts and the fitted ring, belonging to the inner pair of disks.

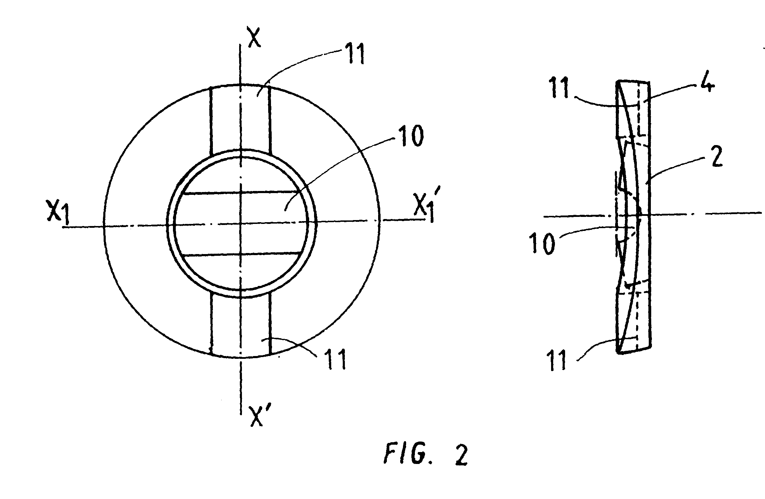

FIG.2 is a front view and side view of the other disk of the ring, belonging to the inner pair of disks.

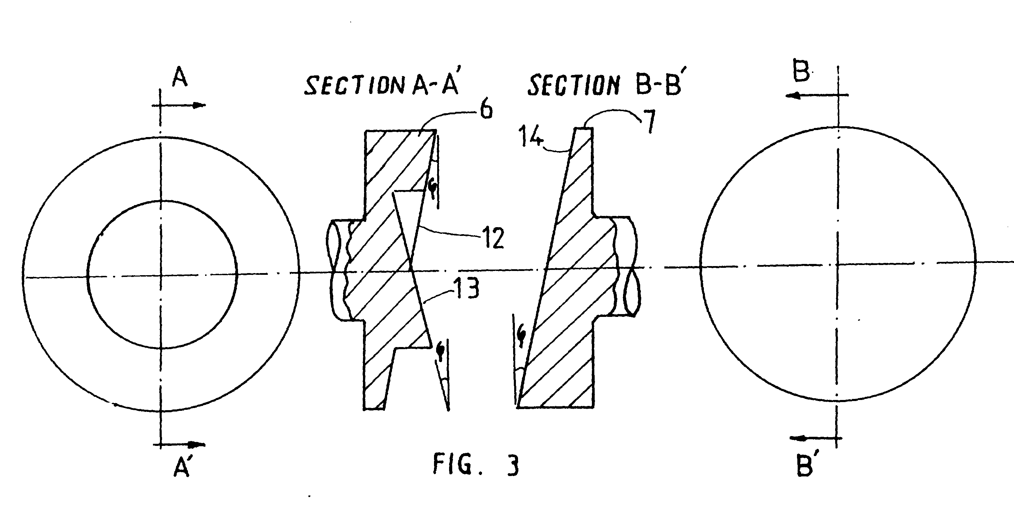

FIG.3 illustrates views and cross sections of the inclined disks of the outer pair of disks and a surface configuration with opposite inclination angle.

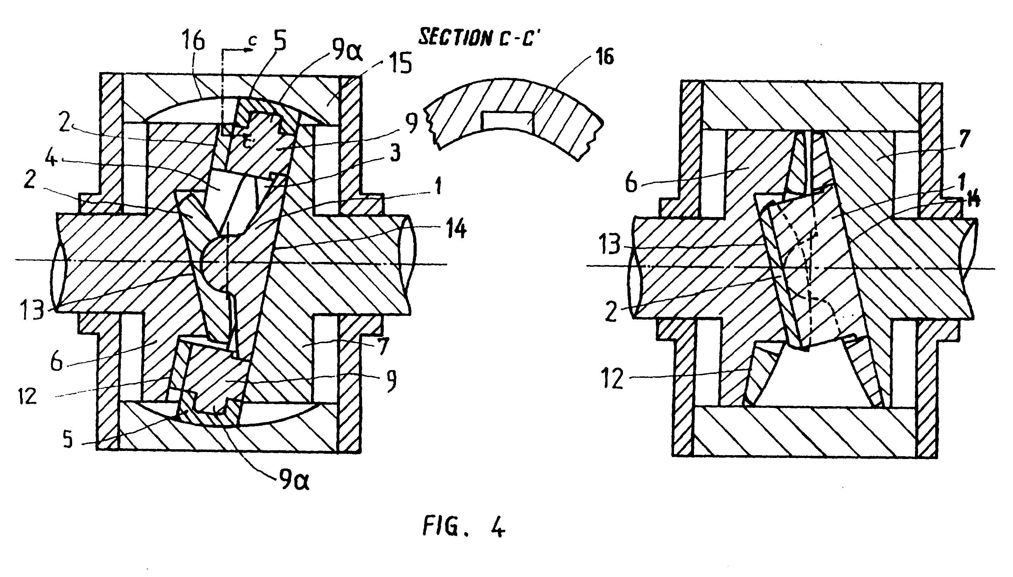

FIG.4 illustrates various views and arrangements of disks and rings of the mechanism, during the simultaneous movement of the inner and outer pair of disks.

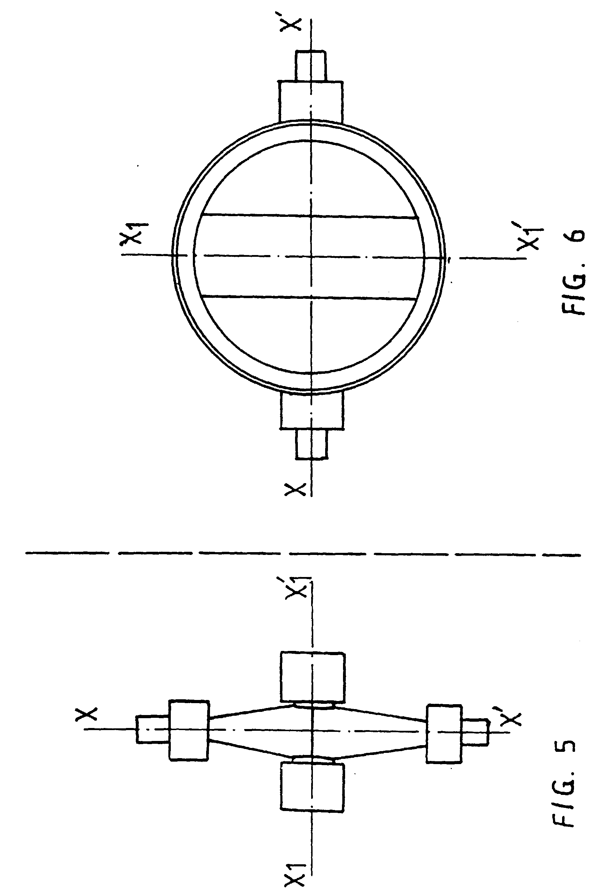

FIG.5,6 illustrate views in cross section of the mechanism shafts of different shape.

FIG.7 illustrates graphs "friction-adhesion loss" for comparison reasons, of the efficiency of existing in use improved mechanisms and the proposing mechanism by these presents.

### DETAILED DESCRIPTION OF DRAWINGS

Referring to Figures (1,2,3,4) an application is illustrated of the controlled direct engagement differential comprising: the disk (1, 2), the rings (3, 4) the plates (5) and the outer pair of disks (6, 7).

Proper serration are machined on the disk (1) periphery for mounting the disk inside the respective serrated bore of ring (3). After mounting disk and ring, their outer side appears as a uniform plane, circular, surface.

The one inner side disk (1) has on its inner side diametrically a semicylidrical portion (8) and the one ring (3) has on its inner side diametrically opposite two semicylindrical extensions (9) so that their axis (x1 x1) is inclined to the axis xx of the semicylindrical protrusion (8) of disk (1).

On the periphery of said one ring (3) are fitted diametrically opposite two semicylindrical shafts (9a), at the ends of these shafts, plates (5) are attached forming a joint.

Disk (2) is of equal diameter with disk (1) and is assembled, so that it can move freely inside the bore of ring (4). The inner side of disk (2) has a semicylindrical groove (10) on a diametrical position respective to the semicylindrical protrusion (8) of disk (1).

The inner side of disk (4) has the semicylindrical grooves (11) on a diametrically opposite position respective to the semicylindrical extensions (9) of ring (3) of disk (1).

The inner sides of disks (1, 2) and rings (3, 4) are machined, so that the plane surfaces on both sides of configurations (8, 10) and (9, 11) are inclined towards the perimeter under a certain inclination angle, allowing the convergence and divergence of the disks around configurations (8, 10).

The outer plane surfaces of disks and rings of the inner pair (1, 2, 3, 4) are in full and continuous contact with the surfaces (12, 13, 14) of the outer pair of disks. The outer pair of disks (6, 7) is coupled to the output axles of the respective driving wheels. Said disks (6, 7) have a cylindrical shape and their outer plane surfaces slide on the casing 15 during mechanism operation.

The inner side of disk (6) comprises: a circular plane surface (12), inclined towards the vertical direction to a(ϕ) angle and a concentric circular plane surface (13) inclined towards the vertical direction to a same (ϕ) angle, but to a direction opposite to that of surface(12).

The inner side of disk (7) forms a uniform circular plane surface (14) inclined to an angle ϕ equal to the angle ϕ of disk surfaces (6).

The assembling of the mechanism is executed as follows: plates (5) are located on the proper recess (16) of the inner surface of casing (15), sliding on it, during its rotation. Ring (3) with shafts (9a) together with plates (5) is fitted on the periphery of disk (1).

On the semicylindrical protrusion (8) of disk (1) is adapted, through groove (10), disk (2) forming a joint. About this joint wobble converging and diverging both disks (1, 2) during transmission of drive.

Ring (4) is assembled encircling disk (2), Grooves (11) form with the respective semicylindrical extensions (9) of ring (3) joints. About these joints ring (3) with disk (1) and ring (4) converge and diverge during transmission of drive.

Finally disks (6, 7) are assembled and the inclined surface (12) of disk (6) is in full and continuous contact with the outer flat surface of disk (4), the opposite inclined inner surface (3) of same disk (6) is in full and continuous contact with outer surface of disk (2) and the uniform inclination plane surface (14) of disk (7) is in full and continuous contact with the uniform outer plane surface of disk (1) and ring (3). On said surfaces for optimum sliding characteristics proper means for improving these characteristics are applicable. During mechanism operation, we observe the following mode of movement of mechanism disks and rings and their direct controlable engagement in relation to the driving and road surface conditions. With the rotation of the casing, drive is transmitted through sliding plates(5)to the shafts (9a), ring (3), disk (1), ring (4) and disk (2) with the help of their respective joints. Simultaneously this drive is transmitted, through rotation and convergence, divergence (wobbling) of inner pair of disks and rings, to the outer pair of disks (6), (7), wherein their outer plain surfaces slide on the inside surface of the casing.

The inner surfaces (12, 13, 14) of said disks as they move, slide in contact with surfaces (4, 2, 1, 3) respectively. Said surfaces of disks (6, 7) during casing rotation are moving with a sequence of convergences, parallel movements, and divergences and as it is obvious they are moving with an opposite sequence of movements compared to that of the inner disks-rings pair surfaces.

The opposite inclination of surface (1) of disk (6) as compared to the inclined surface (12) of the same disk, along with angle (ϕ) is a characteristic and a necessary requirement for the operation of the present mechanism and also for the engagement and direct torque transmission to the driving wheels in the cases of adhesion loss, as follows:

In the case of a drive with normal adhesion the present invention operates as an ordinary differential, for example when the rotational speeds of driving wheels are different, then the rotation of the outer pair of disks, transmitted to the inner pair of disks, is of opposite direction and differing speed for each outer disk comprising the pair resulting in the present engagement system to act as an ordinary differential.

In any other case of adhesion loss of a driving wheel i.e., reduction of friction coefficient, the mechanism is acting as differential of direct engagement, wherein the engaged disk and ring surfaces forced due to their configuration and arrangement to move with an opposite rotational movement and specifically due to the configuration of angle (ϕ), inclined plane surfaces (12, 13, 14,) allowing the direct engagement of the mechanism to a degree dependent on the adhesion loss level of the driving wheel.

In these cases we observe a direct torque delivery from the spinning driving wheel to the wheel with the greater adhesion.

The value of said torque delivered, is proportional to the adhesion loss level. In the case where the friction coefficient is zero (µ=0), the whole torque of the spinning wheel is delivered directly to the wheel with the greater adhesion. The size of angle (ϕ) of the inclined surfaces of disks (6, 7) defines the degree of engagement of the mechanism in the cases of adhesion loss, with an indirectly proportional relation.

Figures (5,6) illustrate various arrangements of shafts (xx) and (x1 x1) from the described arrangement in Fig.(1,2).

Fig. (5) shows a crosswise arrangement of shafts, on which converge and diverge the disks of inner and outer pair.

Fig. (6) shows another embodiment with shafts (xx) and (x1 x2) arranged on a ring.

Fig. (7) illustrates efficiency graphs (A,B,C). On graph (A) is illustrated the efficiency of the present invention mechanism, where both wheels are in the condition of optimum adhesion loss as compared to the graph (B) of the ordinary differential and (C) of the reduced adhesion loss differential.

## Claims

1. Controllable direct engagement differential with disks and rings arranged in a casing (15), for a vehicle with driving wheels, which casing provides a rotatable input of said differential, comprising:
(a) a pair of inner disks (1,2) located in the centre of the differential axis, whereby
(i) the one inner disk (1) has on its inner side diametrically a semi-cylindricall protrusion (8), the outer side of said one disk has a plane circular surface,
(ii) the other inner disk (2) has on its inner side a groove (10) of semi-cylindricall cross section mating with said semicylindrical protrusion (8), the outer side of said disk has a plane circular surface,
(b) two rings (3, 4) encircling said inner disks (1, 2) respectively, whereby
(i) the one ring (3) is mounted on the periphery of said one inner disk (1) to rotate therewith, the outer side of said one ring (3) appears with the outer side of said one inner disk (1) as a uniform plane circular surface,
(ii) said one ring (3) has on its periphery, diametrically opposite, two cylindrical shafts (9a), which shafts bear on their ends plates (5), which plates are in slidable contact with an inner surface of a suitable recess (16) provided ir said casing (15),
(iii) said one ring (3) has on its inner side, diametrically opposite, two semicylindrical extensions (9),
(iv) the other ring (4) is mounted on and encircles said other inner disk (2), which disk (2) can move freely inside the bore of said other ring (4),
(v) said other ring (4) has on its inner side, diametrically opposite, two proper grooves (11) to mate with said two semicylindrical extensions (9) provided on said one ring (3),
(c) an outer pair of disks (6,7), which outer disks provide two rotatable outputs of said differential, whereby
(i) each outer disk (6) and (7) has a plane which is vertical to the differential axis and which is in contact with a respective inner surface of the casing (15),
(ii) the one outer disk (6) has an inner side comprising one circular plane surface (12) inclined at an angle (ϕ) towards said vertical direction plane, and
another circular plane surface (13) inclined towards said vertical direction plane at the same angle (ϕ), but in a direction opposite to that of said one circular plane surface (12),
(iii) the other outer disk (7) has an inner side forming a uniform circular plane surface (14) inclined to an angle equal to said angle (ϕ) of the surfaces (12,13) of said one outer disk (6),
(iv) said inner surfaces (12 - 14) of said outer disks (6,7) are in full and continuous slidable contact with the outer plane surfaces of said two rings (3,4) and of said inner disks (1,2) respectively,
(d) whereby said elements of the differential functions in the case that the wheels of the vehicle move with normal adhesion as an ordinary differential, and
(e) whereby said elements of the differential functions in the case that the wheels of the vehicle move with abnormal adhesion, i.e. a reduction of friction coefficient of one driving wheel, as a blocked differential.

2. Controllable direct engagement differential with disks and rings according to claim 1 wherein the inner disks and rings have the following configurations:
(i) the inner sides of disk (1,2) are properly configured so that next to the semicylindrical protrusion (8) and groove (10) respectively both semicircular plane surfaces are inclined towards the disks periphery under a desired angle allowing the wobbling of disks (1,2) about the protrusion (8) and groove (10),
(ii) the inner side of rings (3,4) is configured on both sides next to extensions (9) and grooves (11) in an inclination form to an angle equal to the angle of the respective disks (1,2).

3. Controllable direct engagement differential with disks and rings according to claim 1 wherein the magnitude of the chosen equal angles (ϕ) of the inrer inclined surfaces (12, 13,14), of outer disks (6,7) determines the desirable blocking degree of said mechanism in an inversely proportional manner.

## Patentansprüche

1. Differential mit kontrolliertem Eingriff durch Scheiben und Ringen in Anordnung in Abdeckung (15) fuer Fahrzeuge mit Antriebsraedern, welche Abdeckung eine umdrehbare Einfuehrung des genannten Differentials gewaehrleistet und besteht aus :
(a) einem Paar von inneren Scheiben (1, 2) die im Zentrum der Differentialachse angebracht sind, wo:
(i) die eine innere Scheibe (1) hat in seiner Innenseite am Durchmesser eine halbzylindrische Hervorkommung (8), die auessere Seite der erwaehnten einen Scheibe hat eine ebene zyklische Oberflaeche,
(ii) die andere innere Scheibe (2) hat in ihrer Innenseite eine Mulde (10) mit einem halbzylindrischen Kreuzbereich der mit der vorher genannten halbzylindrischen Hervorkommung passt (8), die auessere Seite der vorher erwaehnten Scheibe hat eine ebene zyklische Oberflaeche,
(b) zwei Ringe (3, 4), die die vorher genannten inneren Scheiben umkreisen, entsprechend (1, 2), wo:
(i) der eine Ring (3) stuetzt sich auf der Peripherie der oben genannten einen innerer Scheibe (1), damit sich mit ihm, die auessere Seite des vorher genannten einen Ringes (3) dreht, als eine mit der auesseren Seite der vorher genannten einen inneren Scheibe (1) gleichfoermige ebene, zyklische Oberflaeche,
(ii) der vorher genannte Ring (3) hat auf seiner Peripherie, diametrisch entgegengesetzt, zwei zylinderfoermige Achsen (9a), welche Achsen Einfluss mit ihren Enden auf die Platten (5) ausueben, welche Platten sind im Gleitkontakt mit der inneren Pberflaeche einer geeigneten Kruemmung (16) die der vorher erwaehnten Abdeckung (15) weitergeleite wird.
(iii) der vorher genannte Ring (3) hat in seiner inneren Seite , diemetrisch entgegengesetzt, zwei halbzylindrische Verlaengerungen (9),
(iv) der andere Ring (4) stuetzt sich darauf und umkreist die vorher erwaehnte innere Scheibe (2), welche Scheibe (2) sich frei bewegen kann in dem inneren Durchmesser des oben genannten anderen Ringes (4),
(v) der erwaehnte andere Ring (4) hat in seiner inneren Seite, diametrischentgegengesetzt zwei geeignete Mulden (11) um mit den vorher genannten halbzylindrischen Verlaengerungen (9) zu passen die an den vorher erwaehnten einen Ring (3) weitergeleitet werden,
(c) ein auesseres Scheibenpaar (6,7) von welchem die auesseren Scheiben, sich drehbare Ausgaenge, fuer das vorher genannte Differential gewaehrleisten, wo:
(i) jede auessere Scheibe (6) und (7) eine Ebene hat die senkrecht zu der Achse des Differentials ist und die in Verbindung mit einer entsprechenden auesseren Oberflaeche der Abdeckung (15) ist,
(ii) die eine aussere Scheibe (6) hat eine innere Seite, die aus einer zyklischen, ebenen Oberflaeche besteht (12) und die in einem Winkel (ϕ) neigt zu der vorher genannten Ebene senkrechter Richtung und eine andere zyklische ebene Oberflaeche (13) mit Neigung zu der vorher erwaehnten Oberflaeche senkrechter Richrung im gleichen Winkel (ϕ) aber in einer Richtung entgegengesetzt von der vorher erwaehnten einen, zyklischer ebeber Oberflaeche (12),
(iii) die andere auessere Scheibe (7) hat eine innere Seite, die eine gleichfoermige zyklische ebene Oberflaeche (14) bildet, die in einem gleichen Winkel gleich mit vorher erwaehnten Winkel (ϕ) der Oberflaechen (12, 13) neigt, der oben erwaehnten einen auesseren Scheibe (6),
(iv) die vorher genannten inneren Oberflaechen (12-14) der vorher erwaehnten auesseren Scheiben (6, 7) sind in voelligem und staendigem Gleitkontakt mit den auesseren ebenen Oberflaechen der beiden vorher genannten Ringe (3, 4) und entsprechen mit den vorher erwaehnten inneren Scheiben (1, 2),
(d) wo die oben genannten Merkmale sind der Funktionen des Differentials im Falle, in dem die Raeder sich mit normaler Haftung umdrehen, wie ein regulaeres Differential und
(e) wo die oben genannten Merkmale sind der Funktion des Differentials im Falle in dem die Raeder des Fahrzeugs sich unregelmaessige Haftung, umdrehenz. B Verminderung des Reibfaktors an einem Antriebsrad wie ein blockierbares Differential.

2. Differential mit direktem kontrollierbarem Eingriff mit Scheiben und Ringen, gemaess dem Anspruch 1, wo die inneren Scheiben und Ringe folgende Gestaltung aufweisen:
(i) die inneren Seiten der Scheibe (1, 2) sind so gestaltet, dass parallel mit der halbzylindrischen Hervorkommung (8) und der Mulde (10) entsprechend, die beiden halbzylindrischen Oberflaechen zur Peripherie der Scheiben neigen unter einem gewuenschten Winkel und so die Schwingung der Scheiben (1, 2) um die Hervorkommung (8) und der Mulde (10), erlauben,
(ii) die innere Seite der Ringe (3, 4) ist an beiden Seiten gestaltet in der Naehe der Verlaengerungen (9) und den Mulden (11) in einer geneigten Form und einem Winkel der gleich mit dem Winkel der entsprechenden Scheiben (1, 2) ist.

3. Differential mit kontrollierbarem direktem Eingriff mit Scheiben und Ringen, gemaesss dem Anspruch 1, wo die Groesse der gewaehlten gleichen Winkel (ϕ) der inneren geneigten Oberflaechen (12, 13, 14) der auesseren Scheiben (6, 7) den gewuenschten Grad der blockierbarkeit des oben genannten Mechanismus bestimmen auf eine entgegengesetzte analoge Weise.

## Revendications

1. Un différentiel d' engagement controllable direct avec des disques et des bagues arrangés à un cadre (15), pour un véhicule aux roues de conduite, le cadre provide une insertion rotative du différentiel concret qui comprise :
(a) un couple des disques internes (1,2) localisés au centre des axes du différentiel, à travers les quels
(i) I' un disque interne (1) posséde à son coté interne diamétralement une protrusion demicylindrique (8), le coté externe du disque concret a une surface plate circulaire,
(ii) I' autre disque interne (2) posséde à son coté interne une buse (10) d' une section transversale demicylindrique qui fait un couple avec la protrusion demicylindrique concrete (8), l'autre coté du disque mentionné a une surface plate circulaire,
(b) deux bagues (3,4) qui encirclent les disques internes (1,2) respectivement à travers les quels,
(i) I' une bague (3) est placée à la peripherie du disque concret interne (1) à se tourner avec ca, le coté externe de cette bague (3) apparait avec le coté externe de ce disque interne (1) comme une surface uniforme plate sirculaire,
(ii) I' une bague mentionné (3) posséde à son peripherie, diamétralement opposite, deux axes cylindriques (9a), les quels appliquent à leurs plateaux extremes (5), les quels sont en contact glissant avec une surface interne d' un enfoncement suitable (16) providé à ce cadre (15),
(iii) la bague mentionnée (3) posséde à son coté interne, diamétralement opposite, deux extentions demicylindriques (9),
(iv) I' autre bague (4) est placée et encircle l'autre disque interne (2), lequel (2) peut se mouvoir libraiment dans la trou de cette autre bague (4),
(v) I' autre bague (4) posséde à son coté interne diamétralement opposite, deux buses convenables (11) pour faire couple avec les deux extensions demicylindriques (9) providées à cette bague (3),
(c) un couple externe des disques (6,7) lesquels disques provident deux issues rotatives de cet différentiel, à travers les quels,
(i) chaque disque externe(6) et (7) posséde un plan qui est vertical par rapport aux axes du différentiel et lequel est en contact avec une surface interne respective du cadre (15),
(ii) un disque externe (6) possède une côté interne, qui comporte une surface plate circulaire (12) inclinée sous un angle (ϕ) vers ce plan à direction verticale, et une autre surface plate circulaire (13) inclinée sous la meme angle (ϕ), mais vers le sens opposé, du plan à direction verticale mentionné cidessus (12),
(iii) I' autre disque externe (7) posséde une face interne qui forme une surface uniforme plane circulaire(14) inclinée sous un angle égal à l'angle (ϕ) des surfaces (12,13) de ce disque externe(6),
(iv) les surfaces internes (12 - 14) de ces disques externes (6,7) sont en contact glissant complet et continuel avec les surfaces plates externes de ces deux bagues (3,4) et les disques internes (1,2) respectivement,
(d) à travers les quels les elements des fonctions du différentiel dans le cas que les roues du véhicule se meuvent avec une adhesion normale comme un différentiel ordinaire, et
(e) à travers les quels les elements concrets des fonctions du différentiel dans le cas où les roues du véhicule se meuvent avec une adhesion anormale, i.e., une réduction de friction coefficient d' une roue de conduite comme un différentiel blocké.

2. Différentiel d' engagement direct controllable avec des disques et des bagues en acordance à l'exigence 1 où les disques et les bagues internes ont les configurations suivantes :
(i) les cotés internes du disque (1,2) sont propement configurés de facon qu' apres la protrusion demi cylindrique (8) et la buse (10) respectivement les deux surfaces planes demicirculaires sont inclinées vers les disques peripherals sous un angle desiré en permettant le balancement des disques (1,2). la protrusion (8) et la buse (10),
(il) le coté interne des bagues (3,4) est configuré aux deux cotés près des extensions (9) et les buses (11) à une inclination formée par un angle égal à ce des disques respectives (1,2).

3. Le différentiel d'engagement controlable direct avec des disques et des bagues en accordance à l'exigence 1, où la magnitude des angles sélectionnés (ϕ) des surfaces enternes biais (12, 13, 14) aux disques externes (6,7), détermine le degre de blocking desirable du mechanisme mentionné ci-dessus d'une façon inversement proportinnele.
